# FASCICULE DE BREVET EUROPEEN

(11) **EP 2 669 475 B1**
(45) Date de publication et mention de la délivrance du brevet: **01.08.2018**
(21) Numéro de dépôt: 12170536.2
(22) Date de dépôt: 01.06.2012
(51) Int. Cl.: F04D 29/38, F04D 29/54, F01D 5/14, F04D 29/32

(54) **Aube à profile en S de compresseur de turbomachine axiale, compresseur et turbomachine associée**
S-Profil-Laufschaufel für Verdichter einer axialen Strömungsmaschine, zugehöriger Verdichter und Strömungsmaschine
S-shaped profile blade of axial turbomachine compressor, corresponding compressor and turbomachine

(43) Date de publication de la demande: 04.12.2013
(73) Titulaire: Safran Aero Boosters SA, 4041 Herstal (BE)
(72) Inventeur: Iliopoulou, Vasiliki, 3020 Winksele (BE)
(74) Mandataire: Lecomte & Partners

(56) Documents cités:
- EP-A2- 1 953 341
- US-A1- 2010 215 503
- US-B2- 7 484 937

## Description

### Domaine technique

L'invention a trait au domaine des turbomachines axiales, plus particulièrement aux compresseurs de telles turbomachines. L'invention a trait aux aubes de telles machines.

### Technique antérieure

Le document de brevet WO 2009/103528 A2 divulgue différentes géométries d'aubes de turbomachines axiales, et notamment de compresseurs de turbomachines axiales. Il divulgue notamment une géométrie d'aube où le bord d'attaque présente un profil sinusoïdal en S. Cet enseignement combine des profilages de l'aube dans le plan général de l'aube (ou de sa corde) ainsi que perpendiculairement à celui-ci. En d'autres termes, cet enseignement combine des profilages dits en « sweep » et en « lean », respectivement. Le profilage dit en « sweep » est un profilage de l'aube le long de sa hauteur par un « déplacement » de sa section dans une direction correspondant à celle de sa corde axiale. Le « déplacement » sus mentionné correspond essentiellement à un décalage dans une direction donnée de l'empilement des sections de l'aube le long de sa hauteur, le décalage pouvant changer de sens. Le profilage dit en « lean » est un profilage de l'aube le long de sa hauteur par un « déplacement » de sa section dans une direction essentiellement perpendiculaire à celle de sa corde axiale. Cette combinaison de géométrie est présentée comme étant apte à réduire les vortex secondaires, les pertes par fuite et les pertes par écoulement choqué. Il est à noter que les pertes par écoulement choqué ne peuvent en principe pas concerner les aubes de compresseurs basse pression de turbomachines mais uniquement le ventilateur d'entrée (« fan ») et de compresseur transsonique en amont de la chambre de combustion, ou alors les aubes de turbine en aval de la chambre de combustion. Cet enseignement ne propose par ailleurs pas de paramétrage précis du ou des profilages d'aube et, de plus, ne détaille pas l'effet précis de chacune des mesures de profilage divulguées.

Le document de brevet US 2010/0215503 A1 divulgue un profilage d'aube dit en « sweep » pour des applications transsoniques ou supersoniques. Cet enseignement s'intéresse plus particulièrement à la réduction de pertes par écoulement choqué combiné au maintien de l'intégrité de l'aube. Il identifie en effet qu'un profilage vers l'avant de l'aube (« forward sweep ») provoque une concentration de contrainte au niveau du bord d'attaque au pied des aubes, cette concentration de contrainte étant essentiellement due à un décalage vers l'avant du centre de gravité de l'aube. Afin de résoudre ce problème, cet enseignement prévoit un profilage en « sweep » vers l'arrière à une partie haute de l'aube afin de compenser ce décalage du centre de gravité.

Dans le cadre d'applications subsoniques telles que celles rencontrées dans les boosters, notamment les compresseurs basse-pression des turbomachines axiales, les pertes par écoulement choqués sont en principe pratiquement inexistantes. D'autres types de pertes sont cependant présents, tels que les pertes par vortex ou tourbillons générées par les fuites en tête d'aube rotorique ainsi que les pertes secondaires liées à l'écoulement du fluide le long des parois internes et externes de la veine fluide.

### Résumé de l'invention

### Problème technique

L'invention a pour objectif de proposer une géométrie d'aube palliant au moins un des problèmes susmentionnés. Plus particulièrement, l'invention a pour objectif de proposer une géométrie d'aube à application subsonique apte à diminuer les pertes aérodynamiques liées notamment à l'écoulement du fluide le long de l'aube.

### Solution technique

L'invention a pour objet une aube subsonique de turbomachine axiale, destinée à être disposée radialement sur ladite machine, comprenant un bord d'attaque; un bord de fuite; deux surfaces aérodynamiques opposées l'une à l'autre, s'étendant sur la hauteur de l'aube et reliant, chacune, le bord d'attaque au bord de fuite; le bord d'attaque présentant un profil latéral qui est en forme de S; et remarquable en ce que la zone la plus en avant du bord d'attaque est à une hauteur comprise entre 3% et 20% de la hauteur de l'aube, et/ou la zone la plus en arrière du bord d'attaque est à une hauteur comprise ente 85% et 97% de la hauteur de l'aube.

Le profil de l'aube est considéré latéralement au plan moyen de l'aube.

La hauteur de l'aube est la hauteur de sa partie aérodynamique, c'est-à-dire sans considération de ses moyens de fixation.

La zone le plus en avant et/ou la zone le plus en arrière peuvent être ponctuelles ou encore présenter une portion quasi droite.

Les notions de « le plus en avant » et « le plus en arrière » sont à interpréter par rapport à la direction principale d'écoulement relatif du fluide le long des surfaces aérodynamiques de l'aube.

Selon un mode avantageux de l'invention, la zone la plus en avant du bord d'attaque est à une hauteur comprise entre 5% et 17%, préférentiellement entre 7% et 15% de la hauteur de l'aube, et/ou la zone la plus en arrière du bord d'attaque est à une hauteur comprise ente 87% et 95%, préférentiellement entre 90% et 95% de la hauteur de l'aube

Selon un mode avantageux de l'invention, le profil du bord d'attaque comprend, depuis son extrémité interne vers son extrémité externe, une première portion convexe incluant la zone la plus en avant, et une deuxième portion concave incluant la zone la plus en arrière.

Selon un mode avantageux de l'invention, la première et/ou la deuxième portion du bord d'attaque est à une distance maximale d'une droite passant par les extrémités interne et externe du bord d'attaque qui est comprise entre 5 et 15% de la longueur correspondante de l'aube. La longueur de l'aube est la longueur de sa corde axiale, suivant une direction perpendiculaire à son axe principal, et/ou suivant la direction d'écoulement du fluide le long des surfaces aérodynamiques.

Les première et deuxième portions du bord d'attaque sont telles que leurs distances maximales respectives avec la droite passant par les extrémités interne et externe du bord d'attaque ne diffèrent pas de plus de 40%, préférentiellement 30%, plus préférentiellement 20%, l'une de l'autre.

Selon un mode avantageux de l'invention, le profil du bord d'attaque comprend une zone ou un point d'inflexion entre les première et deuxième portions, ladite zone ou le point étant à une hauteur comprise entre 40% et 60%, préférentiellement entre 45% et 55%, de la hauteur de l'aube.

Selon un mode avantageux de l'invention, le profil du bord d'attaque comprend ou correspond à une fonction polynomiale passant par les extrémités intérieure et extérieure dudit bord, par un ou le point de la zone la plus en avant et par un ou le point de la zone la plus en arrière.

Selon un mode avantageux de l'invention, le profil du bord d'attaque comprend ou correspond à une fonction de Bézier ou B-spline définie par rapport aux deux extrémités intérieure et extérieure dudit bord, par un ou le point de la zone la plus en avant et par un ou le point de la zone la plus en arrière.

Selon un mode avantageux de l'invention, le bord de fuite présente un profil généralement parallèle à celui du bord d'attaque, la distance entre lesdits bords ne variant pas de plus de 10%, préférentiellement 5%.

Selon un mode avantageux de l'invention, la hauteur de la zone la plus en avant du bord d'attaque est supérieure, préférentiellement de 50%, à la hauteur totale de l'aube diminuée de la hauteur de la zone la plus en arrière du bord d'attaque.

Selon un mode avantageux de l'invention, la pente du profil du bord d'attaque à hauteur de son extrémité externe est supérieure, préférentiellement de 20%, plus préférentiellement de 35%, encore plus préférentiellement de 50%, à la pente dudit profil à hauteur de son extrémité interne.

Selon un mode avantageux de l'invention, la pente maximale du profil du bord d'attaque est comprise entre la zone la plus en arrière du profil et son extrémité externe.

Selon un mode avantageux de l'invention, le bord d'attaque et/ou le bord de fuite est/sont généralement compris dans un plan correspondant au plan moyen de l'aube, et ce dans une tolérance de 10%, préférentiellement 5%, plus préférentiellement 1% de la hauteur de l'aube.

L'invention a également pour objet un compresseur de turbomachine axiale, comprenant un rotor avec au moins un étage d'aubes rotoriques et un stator avec au moins un étage d'aubes statoriques; remarquable en ce que les aubes d'au moins un des étages rotoriques et statoriques sont conformes à l'invention.

L'invention a également pour objet une turbomachine axiale, telle qu'un turboréacteur, comprenant un compresseur, remarquable en ce que le compresseur est conforme à l'invention.

### Avantages apportés

Les mesures de l'invention permettent d'augmenter le rendement de la turbomachine dans laquelle les aubes sont mises en oeuvre, et ce par une diminution des pertes liées au vortex en tête d'aube et également par une diminution des pertes secondaires. En effet, le profilage dit en « sweep » selon l'invention permet de générer des composantes radiales aux vecteurs vitesse du fluide le long de l'aube, en particulier à hauteur du bord d'attaque. Ces composantes radiales permettent de redistribuer le débit de fluide sur une portion de l'aube comprise essentiellement entre 20% et 80% de sa hauteur.

Le profil particulier du bord d'attaque, notamment de par sa dissymétrie, permet d'optimiser la redistribution du débit sur la partie centrale de l'aube.

### Brève description des dessins

La figure 1 est une illustration schématique d'une turbomachine axiale.
La figure 2 est une vue en coupe d'un compresseur basse-pression d'une turbomachine axiale telle que celle de la figure 1, auquel les aubes de l'invention peuvent être appliquées.
La figure 3 est un schéma illustrant les aubes rotoriques et statoriques d'un étage de compresseur de turbomachine axiale ainsi que les diagrammes des vitesses du fluide.
La figure 4 est une vue de profil d'une aube conforme à l'invention.
La figure 5 une vue agrandie du profil de l'aube de la figure 4, illustrant sa géométrie.

### Description des modes de réalisation

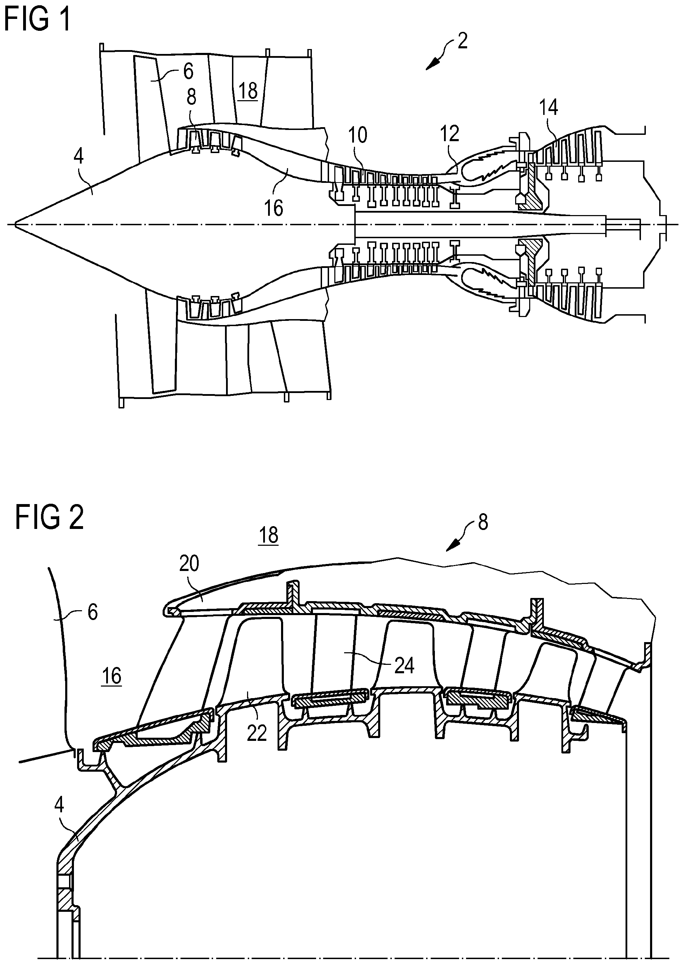

La figure 1 illustre de manière schématique une turbomachine axiale 2. Il s'agit dans ce cas précis d'un turboréacteur double-flux. Le turboréacteur 2 est constitué essentiellement d'un premier étage de compression, dit compresseur basse-pression 8, d'un deuxième étage de compression, dit compresseur haute-pression 10, d'une chambre de combustion 12 et d'un ou plusieurs étages de turbine 14. En fonctionnement, la puissance mécanique de la turbine 14 transmise via l'arbre central jusqu'au rotor 4 met en mouvement les deux étages de compression 8 et 10. Ces derniers comportent plusieurs rangées d'aubes rotoriques associées à des rangées d'aubes statoriques. La rotation du rotor permet ainsi de générer un débit d'air et de comprimer progressivement ce dernier jusqu'à l'entrée de la chambre de combustion 12. Un ventilateur d'entrée communément désigné « turbofan » 6 est couplé au rotor 4 et génère un flux d'air qui se divise en un flux primaire 16 traversant les différents étages sus mentionnés de la turbomachine, et un flux secondaire 18 traversant un conduit annulaire (partiellement représenté) le long de la machine pour ensuite rejoindre le flux primaire en sortie de turbine.

La proportion d'air contournant le moteur est variable selon les moteurs. Elle est d'autant plus élevée que le moteur est destiné à voler à des vitesses faibles. Cette proportion est exprimée par le taux de dilution, égal au rapport du flux froid massique (dit secondaire) sur le flux chaud massique (dit primaire). Les moteurs militaires optimisés pour le vol supersonique peuvent atteindre un taux de dilution en dessous de 1, alors que les moteurs civils pour avions de ligne, optimisés pour des croisières autour de Mach 0,8 ; ont des taux de dilution entre 5 et 10. De tels moteurs tirent l'essentiel de leur poussée du flux froid (80 %), le flux chaud représentant 20 % de la poussée.

La figure 2 est une vue en coupe d'un compresseur basse-pression d'une turbomachine axiale telle que celle de la figure 1. On peut y observer une partie du ventilateur d'entrée ou turbofan 6 et le bec de séparation 20 du flux en le flux primaire 16 et le flux secondaire 18. Le rotor 4 comprend plusieurs rangées d'aubes rotoriques 22. Le carter supporte plusieurs rangées d'aubes statoriques 24. Chaque paire de rangées d'aubes rotoriques et statoriques associées forme un étage de compression du compresseur 8.

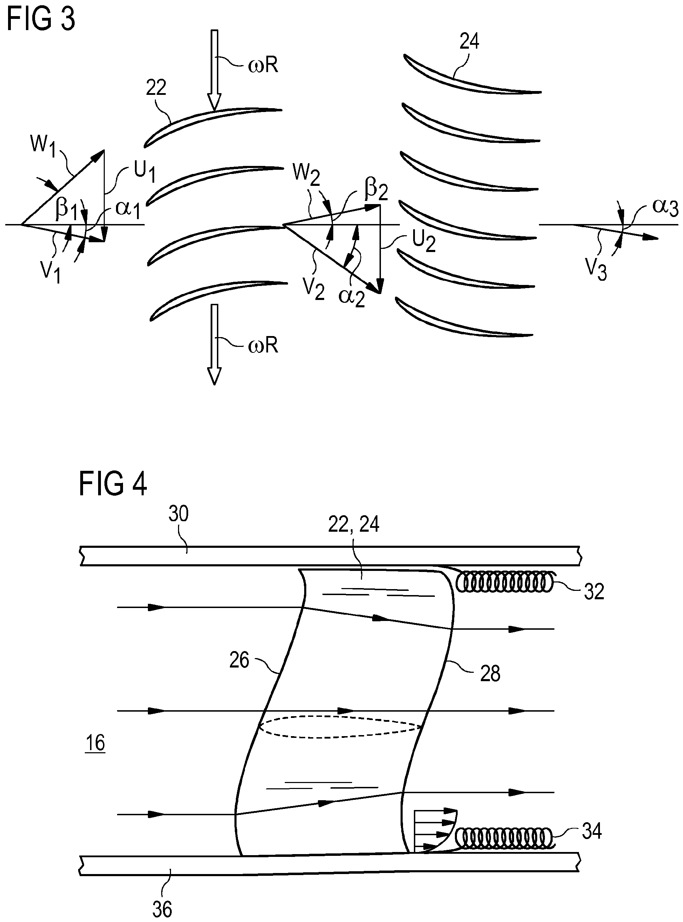

La figure 3 illustre les diagrammes de vitesse du fluide au travers d'un étage de compression. L'étage rotorique 22 accélère l'écoulement du fluide grâce à l'énergie transmise par l'arbre de transmission. L'étage statorique 24 transforme l'énergie cinétique en pression via la forme du stator. En effet, le diagramme de vecteurs à gauche de l'étage rotorique 22 correspond au fluide à l'entrée dudit étage. Le vecteur U₁=ωR correspond à la vitesse de déplacement des aubes rotoriques. Le vecteur W₁ est la vitesse relative d'entrée du fluide dans le rotor et le vecteur V₁ est la vitesse absolue du fluide en entrée du rotor, résultant de la somme vectorielle des vecteurs W₁ et U₁. Le diagramme des vitesses illustré à la droite de l'étage rotorique 22 correspond au fluide à la sortie dudit étage. Le vecteur U de déplacement des aubes rotoriques est identique au vecteur U₁. On peut observer que le fluide est accéléré, le vecteur de sortie V₂ étant sensiblement plus long que le vecteur d'entrée V₁. On peut également observer que la variation d'orientation du vecteur W₁ génère une variation d'orientation du vecteur vitesse V₂ de sortie du fluide. L'angle de sortie α₂ est en effet sensiblement supérieur à l'angle d'entrée α₁. Le vecteur de sortie V₂ est alors essentiellement aligné avec le début du profil des aubes statoriques 24. Les aubes statoriques 24 dévient et décélèrent le fluide ainsi accéléré, cette décélération étant convertie en augmentation de pression. La vitesse V₃ de sortie de l'étage statorique 24 est en effet plus faible et forme un angle α₃ plus faible.

Dans la description qui va suivre, les expressions « externe(s) » et « interne(s) » vont être utilisées pour qualifier la position de certains éléments dans la veine fluide. Ces expressions se rapportent à la section généralement circulaire de la veine fluide, « externe(s) » se rapportant alors à une position plus éloignée par rapport au centre du cercle, c'est-à-dire l'axe de rotation de la machine, et « interne(s) » se rapportant à une position plus proche.

A la figure 4 est illustrée une aube conforme à l'invention ainsi que son impact sur l'écoulement. Il peut s'agir d'une aube rotorique et/ou d'une aube statorique. Dans le cas précis de la figure 4, l'aube est une aube rotorique. Son profil en « sweep », c'est-à-dire relatif à l'empilement de sa section dans une direction correspondant essentiellement à sa corde, y est bien visible. On peut observer que le bord d'attaque 26 ainsi que le bord de fuite 28 présentent tous deux un profil similaire en forme de S. Le profil en S est tel que la moitié intérieure du bord d'attaque est convexe et la moitié extérieure est concave. Ce profil du bord d'attaque et du corps de l'aube a pour effet de générer une composante radiale à la vitesse de déplacement du fluide dans la veine délimitée par les parois interne 36 et externe 30. Cette composante est générée essentiellement pour le fluide évoluant à proximité de ces parois, l'objectif étant d'éloigner le fluide en mouvement desdites parois. Cette concentration du flux de fluide dans la veine permet de réduire les pertes par tourbillon ou vortex de fuite en tête d'aube. Ces pertes sont essentiellement liées au jeu mécanique entre les têtes d'aubes rotoriques et la paroi correspondante du stator. Elles sont illustrées par le tourbillon 32 prenant sa source au niveau du jeu mécanique entre la tête d'aube 22 et la paroi 30.

La concentration du flux de fluide dans la veine permet également de réduire les pertes secondaires liées au gradient de vitesse le long des parois fixes. Ce dernier est illustré sur la paroi 36. Il génère des tourbillons 34 qui constituent des pertes dites secondaires. Ces pertes sont en principe présentes sur la paroi interne 36 ainsi que sur la paroi externe 30.

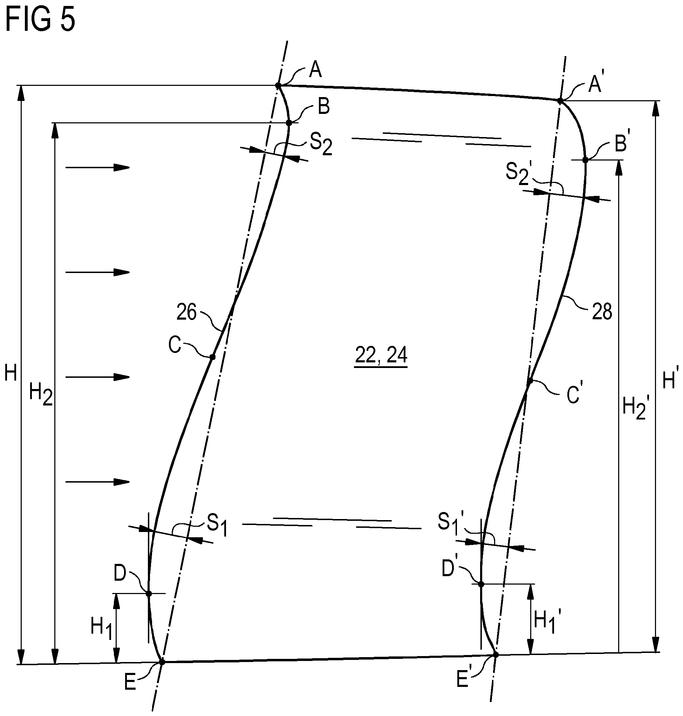

La figure 5 illustre de manière plus détaillée le profil de l'aube 22, 24. Le bord d'attaque 26 est caractérisé par différents points. Le point A est l'extrémité externe au niveau de la tête d'aube. Le point B est le point le plus en aval. Le point D est le point le plus en amont et le point E est l'extrémité interne du bord d'attaque, au niveau du pied de l'aube. Le point C est un point d'inflexion entre la portion interne convexe et la portion externe concave. Il correspond ainsi au changement de concavité du bord d'attaque 26.

Le bord d'attaque 26 présente une hauteur H, le point D étant à une hauteur H₁ et le point B étant à une hauteur H₂. La hauteur H₁ est comprise entre 3% et 20% de la hauteur totale H. La hauteur H₂ est elle comprise entre 85% et 97% de la hauteur totale H. Comme cela est visible à la figure, le point B est plus proche de l'extrémité externe A que le point D n'est proche de l'extrémité interne E.

L'amplitude des portions convexe C-D-E et concave C-B-A profil du bord d'attaque peut être exprimée par les distances S₁ et S₂, respectives, par rapport à un droite passant les points A et E. Ces distances sont préférentiellement comprises entre 5 et 15% de la largeur moyenne de l'aube.

Le profil du bord d'attaque 26 peut correspondre à une fonction polynomiale passant par les points A, B, D et E, préférentiellement d'un degré supérieur ou égal à 3. Il peut s'agir également d'une fonction du type Bézier ou B-spline définie par rapport aux quatre points sus mentionnés.

Le profil du bord de fuite 28 peut être similaire à celui du bord d'attaque 26 notamment en raison de contraintes de place et lorsque les aubes statoriques et rotoriques sont conformes à l'invention.

Les paramètres de caractérisation du profil du bord d'attaque sont également applicables au profil du bord de fuite. Les mêmes lettres de caractérisation sont utilisées, ces lettres se distinguant de ceux du bord d'attaque par l'ajout du signe « ' ». Toutes les remarques faites au sujet du bord d'attaque peuvent être également appliquées au bord de fuite.

L'augmentation de rendement procurée par le design de l'invention par rapport à un étage déjà optimisé est de l'ordre du pourcent ou de l'ordre de quelques dixièmes de pourcent.

## Revendications

1. Aube subsonique (22, 24) de turbomachine axiale (2), destinée à être disposée radialement sur ladite machine, comprenant
un bord d'attaque (26) ;
un bord de fuite (28) ;
deux surfaces aérodynamiques opposées l'une à l'autre, s'étendant sur la hauteur de l'aube et reliant, chacune, le bord d'attaque au bord de fuite ;
le bord d'attaque (26) présentant un profil latéral qui est en forme de S ; et
**caractérisé en ce que**
la zone la plus en avant (D) du bord d'attaque (26) est à une hauteur (H₁) comprise entre 3% et 20% de la hauteur (H) de l'aube, et/ou la zone la plus en arrière (B) du bord d'attaque (26) est à une hauteur (H₂) comprise ente 85% et 97% de la hauteur (H) de l'aube.

2. Aube subsonique (22, 24) selon la revendication 1, **caractérisée en ce que** la zone la plus en avant (D) du bord d'attaque est à une hauteur (H₁) comprise entre 5% et 17%, préférentiellement entre 7% et 15% de la hauteur (H) de l'aube, et/ou la zone la plus en arrière (B) du bord d'attaque est à une hauteur (H₂) comprise ente 87% et 95%, préférentiellement entre 90% et 95% de la hauteur (H) de l'aube

3. Aube subsonique (22, 24) selon l'une des revendications 1 et 2, **caractérisée en ce que** le profil du bord d'attaque (26) comprend, depuis son extrémité interne (E) vers son extrémité externe (A), une première portion convexe (C-DE) incluant la zone la plus en avant (D), et une deuxième portion concave (A-B-C) incluant la zone la plus en arrière (B).

4. Aube subsonique (22, 24) selon la revendication 3, **caractérisée en ce que** la première et/ou la deuxième portion (C-D-E ; A-B-C) du bord d'attaque (26) est à une distance maximale (S₁; S₂) d'une droite (A-E) passant par les extrémités intérieure et extérieure (E ; A) du bord d'attaque (26) qui est comprise entre 5 et 15% de la longueur correspondante de l'aube.

5. Aube subsonique (22, 24) selon l'une des revendications 3 et 4, **caractérisée en ce que** le profil du bord d'attaque (26) comprend une zone ou un point d'inflexion (C) entre les première et deuxième portions (C-D-E ; A-B-C), ladite zone ou le point (C) étant à une hauteur comprise entre 40% et 60%, préférentiellement entre 45% et 55%, de la hauteur (H) de l'aube.

6. Aube subsonique (22, 24) selon l'une des revendications 1 à 5, **caractérisée en ce que** le profil du bord d'attaque (26) comprend ou correspond à une fonction polynomiale passant par les extrémités interne (E) et externe (A) dudit bord, par un ou le point de la zone la plus en avant (D) et par un ou le point de la zone la plus en arrière (B).

7. Aube subsonique (22, 24) selon l'une des revendications 1 à 6, **caractérisée en ce que** le profil du bord d'attaque (26) comprend ou correspond à une fonction de Bézier ou B-spline définie par rapport aux deux extrémités interne (E) et externe (A) dudit bord (26), par un ou le point de la zone la plus en avant (D) et par un ou le point de la zone la plus en arrière (B).

8. Aube subsonique (22, 24) selon l'une des revendications 1 à 7, **caractérisée en ce que** le bord de fuite (28) présente un profil généralement parallèle à celui du bord d'attaque (26), la distance entre lesdits bords ne variant pas de plus de 10%, préférentiellement 5%.

9. Aube subsonique (22, 24) selon l'une des revendications 1 à 8, **caractérisée en ce que** la hauteur (H₁) de la zone la plus en avant (D) du bord d'attaque (26) est supérieure, préférentiellement de 50%, à la hauteur totale (H) de l'aube diminuée de la hauteur (H₂) de la zone la plus en arrière (B) du bord d'attaque (26).

10. Aube subsonique (22, 24) selon l'une des revendications 1 à 9, **caractérisée en ce que** la pente du profil du bord d'attaque (26) à hauteur de son extrémité externe (A) est supérieure, préférentiellement de 20%, plus préférentiellement de 35%, encore plus préférentiellement de 50%, à la pente dudit profil à hauteur de son extrémité interne (E).

11. Aube subsonique (22, 24) selon l'une des revendications 1 à 10, **caractérisée en ce que** la pente maximale du profil du bord d'attaque (26) est comprise entre la zone la plus en arrière (B) du profil et son extrémité externe (A).

12. Aube subsonique (22, 24) selon l'une des revendications 1 à 10, **caractérisée en ce que** le bord d'attaque (26) et/ou le bord de fuite (28) est/sont généralement compris dans un plan correspondant au plan moyen de l'aube, et ce dans une tolérance de 10%, préférentiellement 5%, plus préférentiellement 1% de la hauteur (H) de l'aube.

13. Compresseur (8) de turbomachine axiale (2), comprenant un rotor (4) avec au moins un étage d'aubes rotoriques (22) et un stator avec au moins un étage d'aubes statoriques (24) ; **caractérisé en ce que** les aubes d'au moins un des étages rotoriques et statoriques sont conformes à l'une des revendications 1 à 12.

14. Turbomachine axiale comprenant un compresseur, **caractérisée en ce que** le compresseur est conforme à la revendication 13.

## Patentansprüche

1. Subsonische Schaufel (22, 24) einer axialen Turbomaschine (2), die zur radialen Anordnung an besagter Maschine bestimmt ist, umfassend
eine Vorderkante (26);
eine Hinterkante (28);
zwei einander gegenüberliegende aerodynamische Flächen, die sich über die Höhe der Schaufel erstrecken und wobei jede davon die Vorderkante mit der Hinterkante verbindet;
wobei die Vorderkante (26) ein S-förmiges seitliches Profil aufweist; und **dadurch gekennzeichnet, dass**
der vorderste Bereich (D) der Vorderkante (26) sich auf einer Höhe (H₁) zwischen 3% und 20% der Höhe (H) der Schaufel befindet und/oder der hinterste Bereich (B) der Vorderkante (26) sich auf einer Höhe (H₂) zwischen 85% und 97% der Höhe (H) der Schaufel befindet.

2. Subsonische Schaufel (22, 24) nach Anspruch 1, **dadurch gekennzeichnet, dass** der vorderste Bereich (D) der Vorderkante (26) sich auf einer Höhe (H₁) zwischen 5% und 17%, bevorzugt zwischen 7% und 15%, der Höhe (H) der Schaufel befindet, und/oder der hinterste Bereich (B) der Vorderkante (26) sich auf einer Höhe (H₂) zwischen 87% und 95%, bevorzugt zwischen 90% und 95%, der Höhe (H) der Schaufel befindet.

3. Subsonische Schaufel (22, 24) nach einem der Ansprüche 1 und 2, **dadurch gekennzeichnet, dass** das Profil der Vorderkante (26), von seinem inneren Ende (E) zu seinem äußeren Ende (A), einen ersten konvexen Abschnitt (C-D-E), der den vordersten Bereich (D) enthält, und einen zweiten konkaven Abschnitt (A-B-C), der den hintersten Bereich (B) enthält, umfasst.

4. Subsonische Schaufel (22, 24) nach Anspruch 3, **dadurch gekennzeichnet, dass** der erste und/oder der zweite Abschnitt (C-D-E; A-B-C) der Vorderkante (26) sich in einem maximalen Abstand (S₁; S₂) von einer durch das innere und das äußere Ende (A; E) der Vorderkante (26) verlaufenden Geraden (A-E) befindet, der zwischen 5 und 15% der entsprechenden Länge der Schaufel liegt.

5. Subsonische Schaufel (22, 24) nach einem der Ansprüche 3 und 4, **dadurch gekennzeichnet, dass** das Profil der Vorderkante (26) einen Bereich oder einen Punkt der Biegung (C) zwischen dem ersten und dem zweiten Abschnitt (C-D-E; A-B-C) beinhaltet, welcher Bereich oder Punkt (C) sich in einem Abstand zwischen 40% und 60%, bevorzugt zwischen 45% und 55%, der Höhe (H) der Schaufel befindet.

6. Subsonische Schaufel (22, 24) nach einem der Ansprüche 1 bis 5, **dadurch gekennzeichnet, dass** das Profil der Vorderkante (26) eine Polynomfunktion, die durch das innere (E) und äußere (A) Ende besagter Kante verläuft, durch einen Punkt oder den Punkt des vordersten Bereichs (D) und einen Punkt oder den Punkt des hintersten Bereichs (B), umfasst oder dieser entspricht.

7. Subsonische Schaufel (22, 24) nach einem der Ansprüche 1 bis 6, **dadurch gekennzeichnet, dass** das Profil der Vorderkante (26) eine Bezier-Funktion oder B-Spline, die in Bezug auf das innere (E) und äußere (A) Ende besagter Kante (26) definiert ist, durch einen Punkt oder den Punkt des vordersten Bereichs (D) und einen Punkt oder den Punkt des hintersten Bereichs (B), umfasst oder dieser entspricht.

8. Subsonische Schaufel (22, 24) nach einem der Ansprüche 1 bis 7, **dadurch gekennzeichnet, dass** die Hinterkante (28) ein Profil generell parallel zu dem der Vorderkante (26) aufweist, wobei der Abstand zwischen besagten Kanten nicht um mehr als 10%, bevorzugt 5%, variiert.

9. Subsonische Schaufel (22, 24) nach einem der Ansprüche 1 bis 8, **dadurch gekennzeichnet, dass** die Höhe (H₁) des vordersten Bereichs (D) der Vorderkante (26) größer, bevorzugt um 50%, als die Gesamthöhe (H) der Schaufel vermindert um die Höhe (H₂) des hintersten Bereichs (B) der Vorderkante (26) ist.

10. Subsonische Schaufel (22, 24) nach einem der Ansprüche 1 bis 9, **dadurch gekennzeichnet, dass** die Neigung des Profils der Vorderkante (26) in Höhe ihres äußeren Endes (A) größer, bevorzugt um 20%, bevorzugter um 35%, noch bevorzugter um 50%, als die Neigung besagten Profils in Höhe seines inneren Endes (E) ist.

11. Subsonische Schaufel (22, 24) nach einem der Ansprüche 1 bis 10, **dadurch gekennzeichnet, dass** die maximale Neigung des Profils der Vorderkante (26) zwischen dem hintersten Bereich (B) des Profils und seinem äußeren Ende (A) liegt.

12. Subsonische Schaufel (22, 24) nach einem der Ansprüche 1 bis 10, **dadurch gekennzeichnet, dass** die Vorderkante (26) und/oder die Hinterkante (28) generell in einer der Mittelebene der Schaufel entsprechenden Ebene liegt bzw. liegen, und dies innerhalb einer Toleranz von 10%, bevorzugt 5%, bevorzugter 1% der Höhe (H) der Schaufel.

13. Verdichter (8) einer axialen Turbomaschine (2), umfassend einen Rotor (4) mit mindestens einer Rotorschaufelstufe (22) und einen Stator mit mindestens einer Statorschaufelstufe (24); **dadurch gekennzeichnet, dass** die Schaufeln von mindestens einer der Rotor-und Statorstufen in Übereinstimmung mit einem der Ansprüche 1 bis 12 sind.

14. Axiale Turbomaschine, umfassend einen Verdichter, **dadurch gekennzeichnet, dass** der Verdichter in Übereinstimmung mit Anspruch 13 ist.

## Claims

1. Subsonic blade (22, 24) of an axial turbomachine (2), intended to be located radially on the said machine, comprising
a leading edge (26);
a trailing edge (28);
two aerodynamic surfaces on opposite sides to each other, extending over the height of the blade, with each one joining the leading edge to the trailing edge; the leading edge (26) having an S-shaped lateral profile; and
**characterised in that**
the foremost area (D) of the leading edge (26) is at a height (H₁) comprised between 3% and 20% of the height of the blade, and/or the rearmost area (B) of the leading edge (26) is at a height (H₂) comprised between 85% and 97% of the height (H) of the blade.

2. Subsonic blade (22, 24) in accordance with Claim 1, **characterised in that** the foremost area (D) of the leading edge (26) is at a height (H₁) comprised between 5% and 17%, preferably between 7% and 15% of the height (H) of the blade, and/or the rearmost area (B) of the leading edge (26) is at a height (H₂) comprised between 87% and 95%, preferably between 90% and 95% of the height (H) of the blade.

3. Subsonic blade (22, 24) in accordance with one of Claims 1 and 2, **characterised in that** the profile of the leading edge (26) comprises, from its inner end (E) to its outer end (A), a first convex portion (C-D-E) containing the foremost area (D), and a second concave portion (A-B-C) containing the rearmost area (B).

4. Subsonic blade (22, 24) in accordance with Claim 3, **characterised in that** the first and/or second sections of the leading edge (C-D-E, A-B-C) of the leading edge (26) is at a maximum distance (S₁, S₂) from a straight line (A-E) passing through the inner and outer ends (E; A) of the leading edge (26) that is between 5 and 15% of the corresponding length of the blade.

5. Subsonic blade (22, 24) in accordance with one of Claims 3 and 4, **characterised in that** the leading edge (26) profile includes an area or a point of inflection (C) between the first and second sections (C-D-E, A-B-C), the said area or point (C) being at a distance between 40% and 60%, preferably between 45% and 55% along the height (H) of the blade.

6. Subsonic blade (22, 24) in accordance with one of Claims 1 to 5, **characterised in that** the profile of the leading edge (26) comprises or corresponds to a polynomial function passing through the inner (E) and outer (A) ends of the said edge, through a point or the point of the foremost area (D) and a point or the point of the very rearmost area (B).

7. Subsonic blade (22, 24) in accordance with one of Claims 1 to 6 **characterised in that** the profile of the leading edge (26) comprises or corresponds to a Bezier function or a B-spline defined with respect to the inner (E) and outer (A) ends of the said edge (26), through a point or the point of the foremost area (D) and a point or the point of the rearmost area (B).

8. Subsonic blade (22, 24) in accordance with one of Claims 1 to 7, **characterised in that** the trailing edge (28) has a profile generally parallel to the leading edge (26), the distance between the said edges not varying by more than 10%, preferably 5%.

9. Subsonic blade (22, 24) in accordance with one of Claims 1 to 8 **characterised in that** the height (H₁) of the foremost area (D) of the leading edge (26) is greater, preferably by 50%, thanf the total height (H) of the blade less the height (H₂) of the rearmost area (B) of the leading edge (26).

10. Subsonic blade (22, 24) in accordance with one of Claims 1 to 9, **characterised in that** the slope of the profile of the leading edge (26) at its outer end (A) is greater, preferably by 20%, more preferably by 35%, even more preferably by 50% than the slope of the said profile at its inner end (E).

11. Subsonic blade (22, 24) in accordance with one of Claims 1 to 10, **characterised in that** the maximum slope of the leading edge (26) profile lies between the rearmost area (B) of the profile and its outer end (A).

12. Subsonic blade (22, 24) in accordance with one of Claims 1 to 10, **characterised in that** the leading edge (26) and/or trailing edge (28) is/are lie in a plane corresponding to the mid-plane of the blade, and that within a tolerance of 10% preferably 5%, more preferably 1% of the height (H) of the blade.

13. Axial turbomachine (2) compressor (8), comprising a rotor (4) with at least one rotor blade stage (22) and a stator with at least one stator blade stage (24); **characterised in that** the blades of at least one of the rotor and stator stages are in accordance with one of the Claims 1 to 12.

14. Axial turbomachine comprising a compressor, **characterised in that** the compressor is in accordance with Claim 13.
